# EUROPEAN PATENT SPECIFICATION

(11) **EP 4 104 353 B1**
(45) Date of publication and mention of the grant of the patent: **19.08.2026**
(21) Application number: 20918826.7
(22) Date of filing: 14.02.2020
(51) Int. Cl.: H04L 5/00, H04B 7/08

(54) **SRS FOR ANTENNA SWITCHING**
SRS FÜR ANTENNENUMSCHALTUNG
SIGNAUX DE RÉFÉRENCE DE SONDAGE POUR COMMUTATION D'ANTENNE

(43) Date of publication of application: 21.12.2022
(73) Proprietor: Lenovo (Beijing) Limited, Beijing 100085 (CN)
(72) Inventor: LIU, Bingchao, Beijing 102200 (CN); ZHU, Chenxi, Fairfax, Virginia 22033 (US); ZHANG, Yi, Beijing 100029 (CN); LING, Wei, Beijing 102299 (CN)
(74) Representative: Openshaw & Co.
(86) International application number: PCT/CN2020/075229
(87) International publication number: WO 2021/159452

(56) References cited:
- EP-A1- 4 092 945
- WO-A1-2019/218108
- WO-A1-2021/072160
- CN-A- 108 260 217
- CN-A- 110 650 485
- US-A1- 2019 052 328
- US-A1- 2019 253 214
- US-A1- 2019 356 445
- ERICSSON: "On CSI acquisition for reciprocity-based operation", vol. RAN WG1, no. Hangzhou, China; 20170515 - 20170519, 14 May 2017 (2017-05-14), XP051273869, Retrieved from the Internet <URL:http://www.3gpp.org/ftp/Meetings_3GPP_SYNC/RAN1/Docs/> [retrieved on 20170514]

## Description

### FIELD

The subject matter disclosed herein generally relates to wireless communications and, more particularly, to Sounding Reference Signals (SRS) antenna switching with up to 8 antennas in New Radio (NR) system.

### BACKGROUND

The following abbreviations are herewith defined, some of which are referred to within the following description: Third Generation Partnership Project (3GPP), European Telecommunications Standards Institute (ETSI), Frequency Division Duplex (FDD), Frequency Division Multiple Access (FDMA), Long Term Evolution (LTE), Universal Mobile Telecommunications System (UMTS), UMTS Terrestrial Radio Access Network(UTRAN), Evolved UTRAN (E-UTRAN), Very Large Scale Integration (VLSI), Central Processing Unit (CPU), Graphics Processing Unit (GPU), Field Programmable Gate Array (FPGA),Dynamic RAM (DRAM), Synchronous Dynamic RAM (SDRAM), Static RAM (SRAM), Liquid Crystal Display (LCD), Light Emitting Diode (LED), Organic LED (OLED), Random Access Memory (RAM), Read-Only Memory (ROM), Erasable Programmable Read-Only Memory (EPROM or Flash Memory), Compact Disc Read-Only Memory (CD-ROM), Local Area Network (LAN), Wide Area Network (WAN), Personal Digital Assistant (PDA), User Equipment (UE), Downlink (DL), Uplink (UL), Evolved Node B (eNB), Next Generation Node B (gNB), New Radio (NR), Physical Uplink Shared Channel (PUSCH),Physical Uplink Control Channel (PUCCH),Physical Downlink Control Channel (PDCCH), Physical Downlink Shared Channel (PDSCH), Downlink Control Information (DCI), Resource Block (RB), Physical RB(PRB), Identification (ID), Network (NW), Orthogonal Frequency Division Multiplexing (OFDM), Bandwidth Part (BWP), Quasi Co-Located (QCL), Channel State Information (CSI), Multiple-Input Multiple-Output (MIMO), Transmitting (TX), Receiving (RX), Media Access Control (MAC), Control Element (CE), Power Amplifier (PA), Radio Resource Control (RRC), Logical Channel ID (LCID).

In NR system, SRS are transmitted on the uplink and allow the network to estimate the quality of the channel at different frequencies. As a UL-only signal, the SRS is transmitted by the UE to help the gNB obtain the channel state information (CSI) for each user. Channel State Information describes how the NR signal propagates from the UE to the gNB and represents the combined effect of scattering, fading, and power decay with distance. The system uses the SRS for resource scheduling, link adaptation, Massive MIMO, and beam management.

To further enhance channel estimation and to better exploit channel reciprocity, 5G supports SRS antenna switching, which requires the UE to perform uplink sounding on all RX physical antenna ports.

ERICSSON: "On CSI acquisition for reciprocity-based operation",3GPP DRAFT; R1-1708686, vol. RAN WG1, no. Hangzhou, China; 20170515 - 20170519 14 May 2017 (2017-05-14), discusses SRS resource configuration based on UE capability report for antenna switching

EP4092945A1, an earlier document according to Art. 54(3) EPC, discloses a method and system for configuring a sounding reference signal (SRS) resource.

### SUMMARY

This invention relates to NR system, especially for SRS antenna switching. This disclosure tried to address, among other things, some issues associated with SRS antenna switching up to 8 antennas. The invention is defined by the appended independent claims.

Methods and apparatuses for SRS antenna switching are disclosed.

The invention is defined by the appended claims.

Preferably, the remote unit receives an activation command through a Media Access Control (MAC) Control Element (CE) or Downlink Control Information (DCI), wherein the activation command activates one or more SRS resources out of all the configured SRS resources within the one or more SRS resource sets used for antenna switching with the resource type set as aperiodic.

Preferably, the remote unit receives a DCI containing a non-zero SRS request field, and transmitting the activated SRS resources associated with the value of the received SRS request field.

Preferably, in case that the capability is 1T6R, 1 SRS resource set is configured with resource type set as periodic or semi-persistent, the 1 SRS resource set is configured with 6 SRS resources, the 6 SRS resources are transmitted in different symbols, each SRS resource in the 1 SRS resource set consists of a single SRS port, and the SRS port of each SRS resource is associated with a different antenna port of the remote unit.

Preferably, in case that the capability is 1T6R, 1 SRS resource set is configured with resource type set as aperiodic, the 1 SRS resource set is configured with 6 SRS resources, the 6 SRS resources are transmitted in different symbols in one slot, each SRS resource in the 1 SRS resource set consists of a single SRS port, and the SRS port of each SRS resource is associated with a different antenna port of the remote unit.

Preferably, in case that the capability is 1T6R, 2 SRS resource sets are configured each with resource type set as aperiodic, the 2 SRS resource sets are each configured with 3 SRS resources, a total of 6 SRS resources are transmitted in different symbols of 2 different slots, the SRS port of each SRS resource in each of the 2 SRS resource sets is associated with a different antenna port of the remote unit.

Preferably, in case that the capability is 1T6R, 3 SRS resource sets are configured each with resource type set as aperiodic, the 3 SRS resource sets are each configured with 2 SRS resources, a total of 6 SRS resources are transmitted in different symbols of 3 different slots, and the SRS port of each SRS resource in the 3 SRS resource sets is associated with a different antenna port of the remote unit.

Preferably, in case that the capability is 2T6R, 1 SRS resource set is configured with resource type set as periodic or semi-persistent, the 1 SRS resource set is configured with 3 SRS resources, the 3 SRS resources are transmitted in different symbols, each SRS resource in the 1 SRS resource set consists of 2 SRS ports, and the SRS port pair of each SRS resource is associated with a different antenna port pair of the remote unit.

Preferably, in case that the capability is 2T6R, 1 SRS resource set is configured with resource type set as aperiodic, the 1 SRS resource set is configured with 3 SRS resources, the 3 SRS resources are transmitted in different symbols in one slot, each SRS resource in the 1 SRS resource set consists of 2 SRS ports, and the SRS port pair of each SRS resource is associated with a different antenna port pair of the remote unit.

Preferably, in case that the capability is 2T6R, 2 SRS resource sets are configured each with resource type set as aperiodic, one set of the 2 SRS resource sets is configured with 2 SRS resources with 2 SRS ports and the other one set is configured with 1 SRS resource with 2 SRS ports, a total of 3 SRS resources are transmitted in different symbols of 2 different slots, the SRS port pair of each SRS resource in the 2 SRS resource sets is associated with a different antenna port pair of the remote unit.

Preferably, in case that the capability is 4T6R, 1 or 2 SRS resource sets are configured each with resource type set as periodic, semi-persistent or aperiodic, the 1 or 2 SRS resource sets are each configured with 2 SRS resources transmitted in different symbols, one SRS resource in any of the 1 or 2 SRS resource sets consists of 4 SRS ports and the other SRS resource in the same set consists of 2 SRS ports, and the SRS ports of the second resource in the 1 or 2 SRS resource sets are associated with different antenna ports of the remote unit compared with the SRS ports of the first resource in the same set.

Preferably, in case that the capability is 4T6R, 1 or 2 SRS resource sets are configured each with resource type set as periodic, semi-persistent or aperiodic, the 1 or 2 SRS resource sets are each configured with 3 SRS resources transmitted in different symbols, each SRS resource in the 1 or 2 SRS resource sets consists of 2 SRS ports, and the SRS port pair of each SRS resource is associated with a different antenna port pair of the remote unit.

Preferably, in case that the capability is 1T8R, 1 SRS resource set is configured with resource type set as periodic or semi-persistent, the 1 SRS resource set is configured with 8 SRS resources, the 8 SRS resources are transmitted in different symbols, each SRS resource in the 1 SRS resource set consists of a single SRS port, and the SRS port of each SRS resource is associated with a different antenna port of the remote unit.

Preferably, in case that the capability is 1T8R, 2 SRS resource sets are configured each with resource type set as aperiodic, one set of the 2 SRS resource sets is configured with 6 SRS resources and the other one set is configured with 2 SRS resources, or one set of the 2 SRS resource sets is configured with 5 SRS resources and the other one set is configured with 3 SRS resources, or one set of the 2 SRS resource sets is configured with 4 SRS resources and the other one set is configured with 4 SRS resources, a total of 8 SRS resources are transmitted in different symbols of 2 different slots, and the SRS port of each SRS resource in the 2 SRS resource sets is associated with a different antenna port of the remote unit.

Preferably, in case that the capability is 1T8R, 3 SRS resource sets are configured each with resource type set as aperiodic, two sets of the 2 SRS resource sets are configured with 3 SRS resources and the other one set is configured with 2 SRS resources, a total of 8 SRS resources are transmitted in different symbols of 3 different slots, and the SRS port of each SRS resource in the 3 SRS resource sets is associated with a different antenna port of the remote unit.

Preferably, in case that the capability is 1T8R, 4 SRS resource sets are configured each with resource type set as aperiodic, the 4 SRS resource sets are each configured with 2 SRS resources, a total of 8 SRS resources are transmitted in different symbols of 4 different slots, and the SRS port of each SRS resource in the 4 SRS resource sets is associated with a different antenna port of the remote unit.

Preferably, in case that the capability is 2T8R, 1 SRS resource set is configured with resource type set as periodic or semi-persistent, the 1 SRS resource set is configured with 4 SRS resources, 4 SRS resources are transmitted in different symbols, each SRS resource in the 1 SRS resource set consists of 2 SRS ports, and the SRS port pair of each SRS resource is associated with a different antenna port pair of the remote unit.

Preferably, in case that the capability is 2T8R, 2 SRS resource sets are configured each with resource type set as aperiodic, the 2 SRS resource sets are each configured with 2 SRS resources, or one set of the 2 SRS resource sets is configured with 1 SRS resource and the other one set is configured with 3 SRS resources, a total of 4 SRS resources are transmitted in different symbols of two different slots, the SRS port pair of each SRS resource in the 2 SRS resource sets is associated with a different antenna port of the remote unit pair.

Preferably, in case that the capability is 4T8R, 1 or 2 SRS resource sets are configured each with resource type set as periodic, semi-persistent or aperiodic, the 1 or 2 SRS resource sets are each configured with 2 SRS resources transmitted in different symbols, each SRS resource in the 1 or 2 SRS resource sets consists of 4 SRS ports, and the SRS ports of the second resource in the 1 or 2 SRS resource sets are associated with different antenna ports of the remote unit compared with the SRS ports of the first resource in the same set.

Preferably, in case that more than one SRS resource sets are configured, all of the SRS resource sets are configured with the same value of power control related parameters in the SRS configuration, wherein the power control related parameters are higher layer parameters *alpha, p0, pathlossReferenceRS,* and *srs-PowerControlAdjustmentStates* in *SRS-ResourceSet* information element.

Preferably, in case that more than one SRS resource sets are configured, all of the SRS resource sets are configured with the same value of DCI trigger state related parameters in the SRS configuration, wherein the DCI trigger state related parameters are higher layer parameter *aperiodicSRS-ResourceTrigger* or an entry in *AperiodicSRS-ResourceTriggerList* in *SRS-ResourceSet* information element.

Preferably, in case that more than one SRS resource sets are configured, the SRS resource sets are configured with a different value of slot offset related parameter in the SRS configuration, which indicates the SRS transmission slot, wherein the slot offset related parameter is higher layer parameter *slotOffset* in *SRS-ResourceSet* information element.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments, and are not, therefore, to be considered to be limiting in scope, the embodiments will be described and explained with additional specificity and detail through the use of the accompanying drawings, in which:
Figure 1 is a schematic block diagram illustrating one embodiment of a wireless communication system for SRS antenna switching;
Figure 2 is a schematic block diagram illustrating one embodiment of an apparatus that may be used to transmit SRS;
Figure 3 is a schematic block diagram illustrating one embodiment of an apparatus that may be used to receive SRS;
Figure 4 is a schematic illustrating an example of SRS antenna switching;
Figure 5 is a schematic illustrating aperiodic SRS transmission for antenna switching in case of 1T6R according to an embodiment of the invention;
Figure 6 is a schematic illustrating aperiodic SRS transmission for antenna switching in case of 1T6R according to another embodiment of the invention;
Figure 7 is a schematic illustrating aperiodic SRS transmission for antenna switching in case of 1T6R according to another embodiment of the invention;
Figure 8 is a schematic illustrating aperiodic SRS transmission for antenna switching in case of 1T8R according to an embodiment of the invention;
Figure 9 is a schematic illustrating aperiodic SRS transmission for antenna switching in case of 1T8R according to another embodiment of the invention;
Figure 10 is a schematic illustrating aperiodic SRS transmission for antenna switching in case of 1T8R according to another embodiment of the invention;
Figure 11 is a schematic illustrating an example of MAC CE format for the function of channel sounding with antenna ports subset according to an embodiment of the invention;
Figure 12 is a flow chart illustrating a procedure performed at a UE for SRS antenna switching according to the embodiments of the invention;
Figure 13 is a flow chart illustrating a procedure performed at a gNB for SRS antenna switching according to the embodiments of the invention.

### DETAILED DESCRIPTION

As will be appreciated by one skilled in the art, aspects of the embodiments may be embodied as a system, apparatus, method, or program product. Accordingly, embodiments may take the form of an entire hardware embodiment, an entire software embodiment (including firmware, resident software, micro-code, etc.) or an embodiment combining software and hardware aspects that may generally all be referred to herein as a "circuit", "module" or "system". Furthermore, embodiments may take the form of a program product embodied in one or more computer readable storage devices storing machine-readable code, computer readable code, and/or program code, referred to hereafter as "code". The storage devices may be tangible, non-transitory, and/or non-transmission. In a certain embodiment, the storage devices only employ signals for accessing code.

Certain functional units described in this specification may be labeled as "modules", in order to more particularly emphasize their independent implementation. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. This operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but need not necessarily be, an electronic, magnetic, optical, electromagnetic, infrared, holographic, micromechanical, or semiconductor system, apparatus, or device, or any suitable combination of the foregoing.

A non-exhaustive list of more specific examples of the storage device would include the following: an electrical connection having one or more wires, a portable computer diskette, a hard disk, random access memory (RAM), read-only memory (ROM), erasable programmable read-only memory (EPROM or Flash Memory), portable compact disc read-only memory (CD-ROM), an optical storage device, a magnetic storage device, or any suitable combination of the foregoing. In the context of this document, a computer-readable storage medium may be any tangible medium that may contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may be executed entirely on the user's computer, partly on the user's computer, as a stand-alone software package, partly on the user's computer and partly on a remote computer or entirely on the remote computer or server. In the very last scene, the remote computer may be connected to the user's computer through any type of network, including a local area network (LAN) or a wide area network (WAN), or the connection may be made to an external computer (for example, through the Internet using an Internet Service Provider).

Reference throughout this specification to "one embodiment", "an embodiment", or similar language means that a particular feature, structure, or characteristic described in connection with the embodiment is included in at least one embodiment. Thus, appearances of the phrases "in one embodiment", "in an embodiment", and similar language throughout this specification may, but do not necessarily, all refer to the same embodiment, but mean "one or more but not all embodiments" unless expressly specified otherwise. The terms "including", "comprising", "having", and variations thereof mean "including but are not limited to", unless otherwise expressly specified. An enumerated listing of items does not imply that any or all of the items are mutually exclusive, otherwise unless expressly specified. The terms "a", "an", and "the" also refer to "one or more" unless otherwise expressly specified.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid any obscuring of aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, may be implemented by code. This code may be provided to a processor of a general purpose computer, special purpose computer, or other programmable data processing apparatus to produce a machine, such that the instructions, which are executed via the processor of the computer or other programmable data processing apparatus, create means for implementing the functions/acts specified in the schematic flowchart diagrams and/or schematic block diagrams for the block or blocks.

The code may also be stored in a storage device that may direct a computer, other programmable data processing apparatus, or other devices, to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices, to cause a series of operational steps to be performed on the computer, other programmable apparatus or other devices to produce a computer implemented process such that the code executed on the computer or other programmable apparatus provides processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that in some alternative implementations, the functions noted in the block may occur out of the order noted in the Figures. For example, two blocks shown in succession may substantially be executed concurrently, or the blocks may sometimes be executed in the reverse order, depending upon the functionality involved. Other steps and methods may be conceived that are equivalent in function, logic, or effect to one or more blocks, or portions thereof, to the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, may be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

The description of elements in each figure may refer to elements of proceeding figures. Like numbers refer to like elements in all figures, including alternate embodiments of like elements.

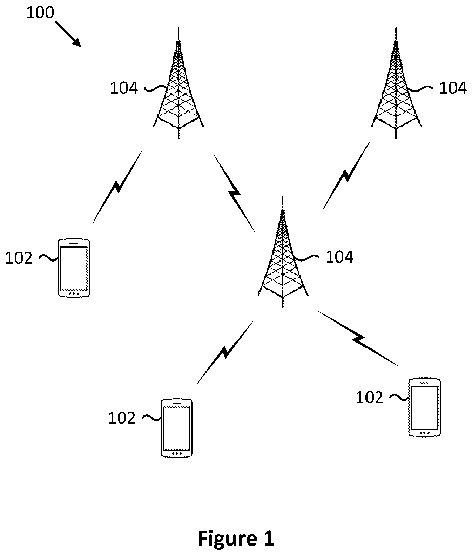

Figure 1 depicts an embodiment of a wireless communication system 100. The wireless communication system 100 can support SRS antenna switching. In one embodiment, the wireless communication system 100 includes remote units 102 and base units 104. Even though a specific number of the remote units 102 and the base units 104 are depicted in Figure 1, it should be noted that any number of the remote units 102 and the base units 104 may be included in the wireless communication system 100.

In one embodiment, the remote units 102 may include computing devices, such as desktop computers, laptop computers, personal digital assistants ("PDAs"), tablet computers, smartphones, smart televisions (e.g., televisions connected to the Internet), set-top boxes, game consoles, security systems (including security cameras), vehicle on-board computers, network devices (e.g., routers, switches, modems), or the like. In some embodiments, the remote units 102 include wearable devices, such as smartwatches, fitness bands, optical head-mounted displays, or the like. The remote units 102 may be referred to as subscriber units, mobiles, mobile stations, users, terminals, mobile terminals, fixed terminals, subscriber stations, UE, user terminals, a device, or by other terminology used in the field. The remote units 102 may communicate directly with one or more of the base units 104 via UL communication signals.

The base units 104 may be distributed over a geographic region. In certain embodiments, a base unit 104 may also be referred to as an access point, an access terminal, a base, a base station, a Node-B, an eNB, a gNB, a Home Node-B, a relay node, a device, or by any other terminology used in the field. The base units 104 are generally part of a radio access network that includes one or more controllers communicably coupled to one or more corresponding base units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the field.

In one implementation, the wireless communication system 100 is compliant with the 3GPP 5G NR. More generally, however, the wireless communication system 100 may implement some other open or proprietary communication protocol, for example, WiMAX, among other protocols.

The base units 104 may serve a number of the remote units 102 within a serving area, for example, a cell or a cell sector via a wireless communication link. The base units 104 transmit DL communication signals to serve the remote units 102 in the time, frequency, and/or spatial domain.

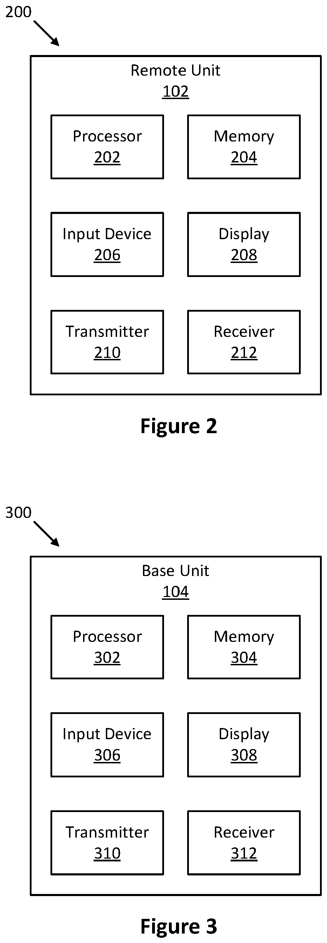

Figure 2 depicts one embodiment of an apparatus 200 that may be used for SRS antenna switching. The apparatus 200, in one embodiment, includes a remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include at least one of the processor 202, the memory 204, the transmitter 210 and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, flash memory, or any other suitable non-volatile computer storage device. In some embodiments, the memory 204 includes both volatile and non-volatile computer storage media. In some embodiments, the memory 204 stores data relating to system parameters. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, an LCD display, an LED display, an OLED display, a projector, or similar display device capable of outputting images, text, or the like to a user. As another, non-limiting example, the display 208 may include a wearable display such as a smartwatch, smart glasses, a heads-up display, or the like. Further, the display 208 may be a component of a smartphone, a personal digital assistant, a television, a tablet computer, a notebook (laptop) computer, a personal computer, a vehicle dashboard, or the like.

In certain embodiments, the display 208 includes one or more speakers for producing sound. For example, the display 208 may produce an audible alert or a notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and the display 208 may form a touchscreen or a similar touch-sensitive display. In other embodiments, the display 208 may be located near the input device 206.

The transmitter 210 is used to provide UL communication signals to the base unit 104 and the receiver 212 is used to receive DL communication signals from the base unit 104. In various embodiments, the receiver 212 may be used to receive the broadcast signal. Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

Figure 3 depicts one embodiment of an apparatus 300 that may be used for SRS antenna switching. The apparatus 300 includes one embodiment of the base unit 104. Furthermore, the base unit 104 may include at least one of a processor 302, a memory 304, an input device 306, a display 308, a transmitter 310 and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In various embodiments, the transmitter 310 is used to transmit signaling to the remote unit. Although only one transmitter 310 and one receiver 312 are illustrated, the base unit 104 may have any suitable number of transmitters 310 and receivers 312. The transmitter 310 and the receiver 312 may be any suitable type of transmitters and receivers. In one embodiment, the transmitter 310 and the receiver 312 may be part of a transceiver.

SRS can be configured for periodic, semi-persistent, or aperiodic transmission.

A periodic SRS is transmitted with a certain configured periodicity and a certain configured slot offset within that periodicity.

A semi-persistent SRS has a configured periodicity and slot offset in the same way as a periodic SRS. However, actual SRS transmission according to the configured periodicity and slot offset is activated and deactivated by means of MAC CE signaling.

An aperiodic SRS is only transmitted when explicitly triggered by means of DCI.

It should be pointed out that, activation/deactivation and triggering for semi-persistent and aperiodic SRS, respectively, is actually not done for a specific SRS resource but rather done for a so-called SRS resource set which, in the general case, included multiple SRS resources.

A device can be configured with one or several SRS resource sets, where each resource set includes one or several configured SRS resources. As described above, an SRS resource can be configured for periodic, semi-persistent, or aperiodic transmission. All SRS resources included within a configured SRS resource set have to be of the same type.

A UE can be configured with multiple SRS resource sets that can be used for different purposes, including beam management, codebook based UL transmission, non-codebook based UL transmission and antenna switching. The transmission of aperiodic SRS, or more accurately, the transmission of the set of configured SRS included in an aperiodic SRS resource set, is triggered by DCI.

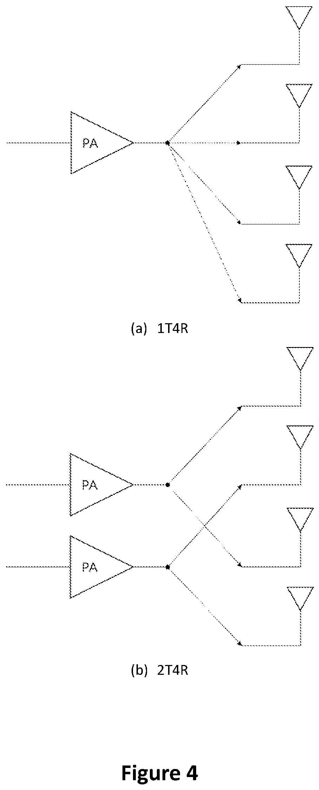

Figure 4 is a schematic illustrating an example of SRS antenna switching.

The gNB can get the full channel state information based on the received SRS resource transmitted from the UE if the channel reciprocity is held in TDD system. In NR, UE is generally equipped with multiple receiving antennas and only some of them can be used for UL transmission. The UE is required to transmit SRS resources over all antennas by the means of antenna switching to get the full DL channel information.

For example, a UE may have 4 antennas, all of which can be used to receive signals, but only one antenna can be used to send SRS at a time, which is referred to as 1T4R. Similarly, if two of the four antennas are available for SRS transmission at one time, it is referred to as 2T4R. In TDD, a gNB may obtain channel state information through receiving SRS from a UE based on channel reciprocity. For example, if the gNB has 8 antennas and the UE has 4 antennas, the full channel matrix should be a 4 * 8 matrix. However, in the case of 1T4R, the UE can only transmit SRS through one antenna at a time, so the channel matrix obtained by the gNB through sounding is a 1 * 8 matrix. In order to obtain a full 4 * 8 channel matrix, the UE needs to transmit SRS on all 4 antennas. A full 4 * 8 channel matrix is spliced through four 1 * 8 submatrices. In order to transmit SRS on each antenna, an antenna switching scheme is required.

Antenna switching based SRS is supported in NR Release-15/16 for DL CSI acquisition based on the UL-DL channel reciprocity. When the UE is configured with the higher layer parameter *usage* in *SRS-ResourceSet* set as 'antennaSwitching', UE may perform antenna switching in a various way depending on RRC parameter setting in *SRS-ResourceSet.* The UE may be configured with one of the following configurations depending on the indicated UE capability *supportedSRS-TxPortSwitch,* specifically, 't1r2' for 1T2R, 't2r4' for 2T4R, 'tlr4' for 1T4R, 't1r4-t2r4' for 1T4R/2T4R, 't1r1' for 1T=1R, 't2r2' for 2T=2R, or 't4r4' for 4T=4R. Here, xTyR means the UE is configured with y antennas, while x of them can be used to transmit SRS simultaneously.

Figure 4 (a) illustrates SRS antenna switching for 1T4R and Figure 4(b) for 2T4R. As shown in Figure 4(a), for 1T4R, the SRS signals (passing through a power amplifier (PA)) are transmitted on 4 antennas in turn, and one antenna is selected by a switch for transmission at a time. As shown in Figure 4(b), for 2T4R, the SRS signals (passing through a PA) are transmitted on 4 antennas in turn, and 2 antennas are selected by a switch for transmission at a time.

The configuration with respect to each UE capability will be described below.

For 1T2R, up to two SRS resource sets are configured with a different value for the higher layer parameter *resourceType* in *SRS-ResourceSet* set. Each set has two SRS resources transmitted in different OFDM symbols. Each SRS resource in a given set consists of a single SRS port. And the SRS port of the second resource in the set is associated with a different UE antenna port than the SRS port of the first resource in the same set.

For 2T4R, up to two SRS resource sets are configured with a different value for the higher layer parameter *resourceType* in *SRS-ResourceSet* set. Each SRS resource set has two SRS resources transmitted in different symbols. Each SRS resource in a given set consists of two SRS ports. And the SRS port pair of the second resource is associated with a different UE antenna port pair than the SRS port pair of the first resource.

For 1T4R, zero or one SRS resource set is configured with higher layer parameter *resourceType* in *SRS-ResourceSet* set to 'periodic' or 'semi-persistent' with four SRS resources transmitted in different symbols. Each SRS resource in a given set consists of a single SRS port. And the SRS port of each resource is associated with a different UE antenna port.

For 1T4R, zero or two SRS resource sets are each configured with higher layer parameter *resourceType* in *SRS-ResourceSet* set to 'aperiodic' and with a total of four SRS resources transmitted in different symbols of two different slots. The SRS port of each SRS resource in the given two sets is associated with a different UE antenna port. The two sets are each configured with two SRS resources, or one set is configured with one SRS resource and the other set is configured with three SRS resources.

Since the two SRS resource sets are for sounding to obtain a full channel matrix, power control related parameters configured for the two SRS resource sets should be the same. Therefore, the UE shall expect that the two sets are both configured with the same values of the higher layer parameters *alpha, p0, pathlossReferenceRS,* and *srs-PowerControlAdjustmentStates* in *SRS-ResourceSet.*

Since the two SRS resource sets are used for one full channel matrix, it should be triggered through one DCI, the UE shall expect that the value of the higher layer parameter *aperiodicSRS-ResourceTrigger* or the value of an entry in *AperiodicSRS-ResourceTriggerList* in each *SRS-ResourceSet* is the same.

Since the two SRS resource sets are triggered through one DCI, in order to avoid collision between the transmission of SRS resources from different SRS resource sets, the UE shall expect that the value of the higher layer parameter *slotOffset* in each *SRS-ResourceSet* is different.

For 1T=1R, or 2T=2R, or 4T=4R, up to two SRS resource sets are configured each with one SRS resource, and the number of SRS ports for each resource is equal to 1, 2, or 4.

According to the invention, due to hardware limitations, the UE is configured with a guard period of a number of OFDM symbols in-between the transmission of SRS resources of a set for antenna switching. During these symbols, the UE does not transmit any other signal, in the case the SRS resources of a set are transmitted in the same slot. The number of guard period symbols depends on the subcarrier spacing.

The UE may be configured with a guard period of Y symbols, in which the UE does not transmit any other signal. The value of Y is defined in Table 1.

**[Table 1] The minimum guard period between two SRS resources of an SRS resource set for antenna switching**

| *µ* | Δ*f* = 2*^{µ}* ·15 [kHz] | ***Y* [symbol]** |
|---|---|---|
| 0 | 15 | 1 |
| 1 | 30 | 1 |
| 2 | 60 | 1 |
| 3 | 120 | 2 |

If the indicated UE capability is 'tlr4-t2r4', the UE shall expect to be configured with the same number of SRS ports, either one or two, for all SRS resources in the SRS resource set(s).

If the indicated UE capability is 't1r2', 't2r4', 'tlr4', 't1r4-t2r4', the UE shall not expect to be configured or triggered with more than one SRS resource set with higher layer parameter *usage* set as *'antennaSwitching'* in the same slot. If the indicated UE capability is 't1r1', or 't2r2', or 't4r4' the UE shall not expect to be configured or triggered with more than one SRS resource set with higher layer parameter *usage* set as *'antennaSwitching'* in the same symbol.

In NR Release-16, up to 8 layers PDSCH transmission for single UE can be supported. However, the current SRS configuration with up to 4 RX cannot support this feature.

Although 8TX UL transmission is difficult to support, up to 8 RX for a UE is possible and up to 8 layers SU-MIMO DL transmission can be benefited by up to 8 RX antennas. Therefore, the enhancement on SRS switching is supported recently including identifying and specifying enhancements on aperiodic SRS triggering to facilitate more flexible triggering and/or DCI overhead/usage reduction, specifying SRS switching for up to 8 antennas (e.g., xTyR, x = {1, 2, 4} and y = {6, 8}), evaluating and, if needed, specifying the following mechanism(s) to enhance SRS capacity and/or coverage: SRS time bundling, increased SRS repetition, partial sounding across frequency.

The above feature of additional UE capability for SRS switching has been supported in NR Release-16. It means that for the UE reporting the capability with 't1r1-t1r2-t2r2-t2r4', the gNB can configure 1 SRS resource set comprising two SRS resources with 2 ports or one SRS resource set comprising 2 SRS resources with 1 port or 1 SRS resource set comprising 1 SRS resource with 1 or 2 ports by RRC signaling. This feature provides the flexibility of partial antenna ports channel sounding according to the RRC signaling.

This feature is more useful for the UE with the capability of 1T6R and/or 1T8R UE, however, the current operation is still inefficient.

Therefore, this invention is aimed to propose several methods to efficiently support the feature of SRS switching for up to 8 antennas, e.g. 1T6R, 2T6R, 4T6R, 1T8R, 2T8R and 4T8R.

In NR Release-16, only the last 6 OFDM symbols in a slot can be used for SRS transmission and at least one symbol guard period is required for UE antenna switching dependent on the numerology.

In LTE Release-16, SRS for antenna switching transmitted in the additional SRS symbols is specified and the guard period for antenna switching and frequency hopping is configurable for the UE according to UE capability. It means that the guard period for antenna switching is not always required for some numerology, e.g. 15 kHz and 30 kHz.

Therefore, a new capability regarding the guard period for antenna switching can be introduced for NR Release-17 UE. The guard period for antenna switching can be configurable and the number of required guard symbols may also be different from the prior art. For example, one symbol guard period for antenna switching in 120 kHz numerology is enough if the transient period for RF chain is less than 8us.

If the UE does not report its capability regarding the guard period for antenna switching, the default guard period for antenna switching is required as defined in Table 6.2.1.2-1 in TS38.214.

Table2 illustrates the UE capability regarding the guard period for antenna switching which can be reported.

**[Table 2]**

| Feature group | Components | Recommendation |
|---|---|---|
| SRS Tx switch | Time duration for antenna switch for each SCS (15kHz, 30kHz, 60kHz, 120kHz). Unit: symbol. | Optional with capability signaling |
| | | Candidate value set for each SCS, {0,1,2}. |
| | | If UE does not report this capability, the default value of 1 for SCS 15kH, 1 for 30kHz, 1for 60kHz and 2 for 120kHz. |

In the present disclosure, SRS antenna switching solution for up to 8RX antennas will be described.

For UE capability 1T6R, 1 SRS resource set may be configured for a UE in a BWP with higher layer parameter *resourceType* in *SRS-ResourceSet* set to 'periodic' or 'semi-persistent'. SRS resources may be transmitted in different symbols. Each SRS resource in a given set consists of a single SRS port. And the SRS port of each resource is associated with a different UE antenna port.

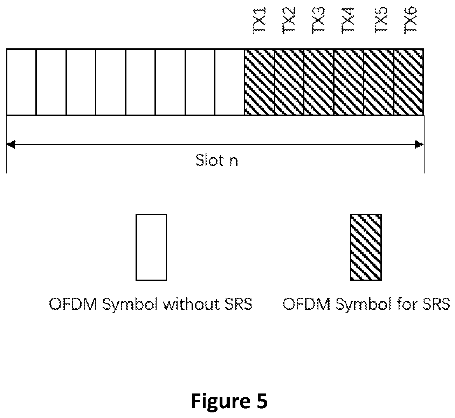

Figure 5 is a schematic illustrating aperiodic SRS transmission for antenna switching in the case of 1T6R according to an embodiment of the invention.

For UE capability 1T6R without guard period, 1 SRS resource set may be configured for a UE in a BWP with higher layer parameter *resourceType* in *SRS-ResourceSet* set to 'aperiodic'. 6 SRS resources are transmitted in different symbols in one slot. Each SRS resource in a given set consisting of a single SRS port. And the SRS port of each resource is associated with a different UE antenna port.

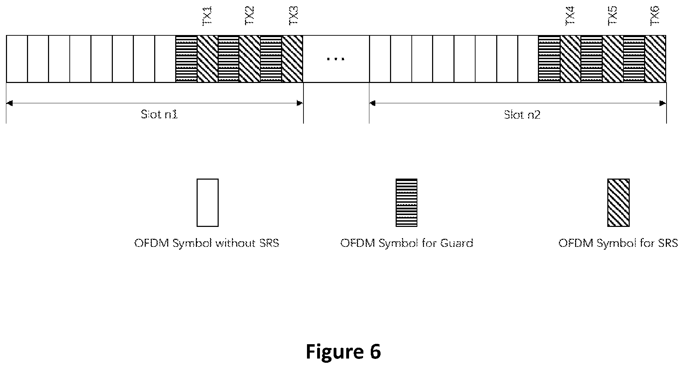

As illustrated in Figure 5, 6 SRS resources are transmitted in the last 6 OFDM symbols in one slot for 6 UE antenna ports respectively. SRS resource transmitted in the 9^{th} OFDM symbol of slot n is associated with UE antenna port TX1, SRS resource transmitted in the 10^{th} OFDM symbol of slot n is associated with UE antenna port TX2, SRS resource transmitted in the 11^{st} OFDM symbol of slot n is associated with UE antenna port TX3, SRS resource transmitted in the 12^{nd} OFDM symbol of slot n is associated with UE antenna port TX4, SRS resource transmitted in the 13^{rd} OFDM symbol of slot n is associated with UE antenna port TX5, SRS resource transmitted in the 14^{th} OFDM symbol of slot n is associated with UE antenna port TX6. In Figure 5, the diagonal stripes shaded blocks represent symbols used to transmit SRS, and the blank blocks represent OFDM symbols without SRS.

Figure 6 is a schematic illustrating aperiodic SRS transmission for antenna switching in the case of 1T6R according to another embodiment of the invention.

For UE capability 1T6R with 1 symbol guard period, 2 SRS resource sets each configured with *resourceType* = 'aperiodic'. Since 6 SRS resources are required to be transmitted in 1T6R and only the last 6 symbols in a slot can be used to transmit SRS, two slots are needed in the presence of 1 symbol guard period. A total of 6 SRS resources are transmitted in different symbols of 2 different slots. The SRS port of each SRS resource in the given 2 sets is associated with a different UE antenna port. The 2 sets are each configured with 3 SRS resources.

As illustrated in Figure 6, 3 SRS resources in the first SRS resource set are transmitted in the 10^{th}, 12^{th} and 14^{th} OFDM symbols in slot n1 for UE antenna ports TX1, TX2 and TX3 respectively, and 3 SRS resources in the second SRS resource set are transmitted in the 10^{th}, 12^{th} and 14^{th} OFDM symbols in slot n2 for UE antenna ports TX4, TX5 and TX6 respectively. There is one OFDM symbol for guard period between every two SRS symbols in each slot. In Figure 6, the diagonal stripes shaded blocks represent OFDM symbols used to transmit SRS, the horizontal stripes shaded blocks represent OFDM symbols for guard period, and the blank blocks represent OFDM symbols without SRS.

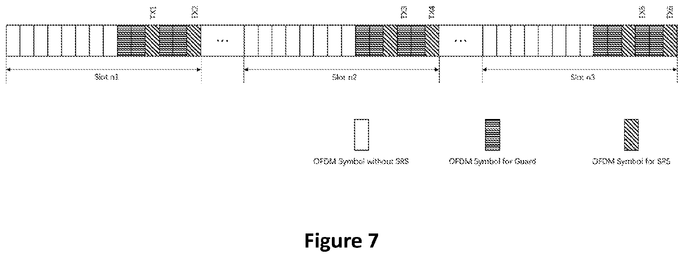

Figure 7 is a schematic illustrating aperiodic SRS transmission for antenna switching in the case of 1T6R according to another embodiment of the invention.

For UE capability 1T6R with 2 symbol guard period, 3 SRS resource sets each configured with *resourceType =* 'aperiodic'. A total of 6 SRS resources are transmitted in different symbols of 3 different slots. The SRS port of each SRS resource in the given 3 sets is associated with a different UE antenna port. The 3 sets are each configured with 2 SRS resources.

As illustrated in Figure 7, 2 SRS resources in the first SRS resource set are transmitted in the 11^{th} and 14^{th} OFDM symbols in slot n1 for UE antenna ports TX1 and TX2 respectively, 2 SRS resources in the second SRS resource set are transmitted in the 11^{th} and 14^{th} OFDM symbols in slot n2 for UE antenna ports TX3 and TX4 respectively, and 2 SRS resources in the third SRS resource set are transmitted in the 11^{th} and 14^{th} OFDM symbols in slot n3 for UE antenna ports TX5 and TX6 respectively. There are two OFDM symbols for guard period between every two SRS symbols in each slot. In Figure 7, the diagonal stripes shaded blocks represent symbols used to transmit SRS, the horizontal stripes shaded blocks represent symbols for guard period, and the blank blocks represent OFDM symbols without SRS.

Considering the potential PUSCH or PUCCH transmission in symbol 7 using different TX antenna port different from TX1 of SRS, and guard symbol is also required before the potential PUSCH or PUCCH transmission and the SRS transmission for antenna switching, so a first guard symbol is configured before the SRS transmission on the first TX antenna port, i.e. TX1, as shown in Figure 6 and Figure 7.

As described above, for the case more than one SRS resource sets are configured and each configured with *resourceType* = 'aperiodic', the UE shall expect that they are configured with the same values of the higher layer parameters *alpha, p0, pathlossReferenceRS,* and *srs-PowerControlAdjustmentStates* in *SRS-ResourceSet,* i.e., same power control related parameters. Since the more than one SRS resource sets are needed to be triggered through one DCI, the UE shall expect that the value of the higher layer parameter *aperiodicSRS-ResourceTrigger* or the value of an entry in *AperiodicSRS-ResourceTriggerList* in each *SRS-ResourceSet* is the same. And the UE shall expect that the value of the higher layer parameter *slotOffset* in each *SRS-ResourceSet* is different to avoid collision between the transmission of SRS resources from different SRS resource sets.

For UE capability 2T6R, 1 SRS resource set may be configured for a UE in a BWP with higher layer parameter *resourceType* in *SRS-ResourceSet* set to 'periodic' or 'semi-persistent'. 3 SRS resources are transmitted in different symbols. Each SRS resource in a given set consists of 2 SRS ports. And the SRS port pair of each resource is associated with a different UE antenna port pair.

For UE capability 2T6R without guard period or with 1 symbol guard period, 1 SRS resource set may be configured for a UE in a BWP with higher layer parameter *resourceType* in *SRS-ResourceSet* set to 'aperiodic'. 3 SRS resources are transmitted in different symbols in one slot. Each SRS resource in a given set consisting of 2 SRS ports. And the SRS port pair of each resource is associated with a different UE antenna port pair.

For UE capability 2T6R with 2 symbols guard period, 2 SRS resource sets each configured with *resourceType =* 'aperiodic'. A total of 3 SRS resources are transmitted in different symbols of 2 different slots. The SRS port pair of each SRS resource in the given two sets is associated with a different UE antenna port pair. One of the two sets is configured with 2 SRS resources with two SRS ports and the other set is configured with 1 SRS resource with 2 SRS ports.

In this case, the UE shall expect that the two sets are configured with the same values of the higher layer parameters *alpha, p0, pathlossReferenceRS,* and *srs-PowerControlAdjustmentStates* in *SRS-ResourceSet.* The UE shall expect that the value of the higher layer parameter *aperiodicSRS-ResourceTrigger* or the value of an entry in *AperiodicSRS-ResourceTriggerList* in each *SRS-ResourceSet* is the same. And the UE shall expect that the value of the higher layer parameter *slotOffset* in each *SRS-ResourceSet* is different.

For UE capability 4T6R, 1 or 2 SRS resource sets may be configured for the UE with a different value for the higher layer parameter *resourceType* in *SRS-ResourceSet* set. Each set has 2 SRS resources transmitted in different symbols. One SRS resource in a set consists of 4 SRS ports and the other SRS resource in a set consists of 2 SRS ports. And the SRS ports of the second resource in the set are associated with different UE antenna ports than the SRS ports of the first resource in the same set.

For UE capability 4T6R without guard period, 1 or 2 SRS resource sets may be configured for the UE with a different value for the higher layer parameter *resourceType* in *SRS-ResourceSet* set. Each set is configured with 3 SRS resources transmitted in different symbols. Each SRS resource in a given set consists of two SRS ports. And the SRS port pair of each resource is associated with a different UE antenna port pair.

For UE capability 1T8R, 1 SRS resource set may be configured for a UE in a BWP with higher layer parameter *resourceType* in *SRS-ResourceSet* set to 'periodic' or 'semi-persistent'. 8 SRS resources are transmitted in different symbols. Each SRS resource in a given set consisting of a single SRS port. And the SRS port of each resource is associated with a different UE antenna port.

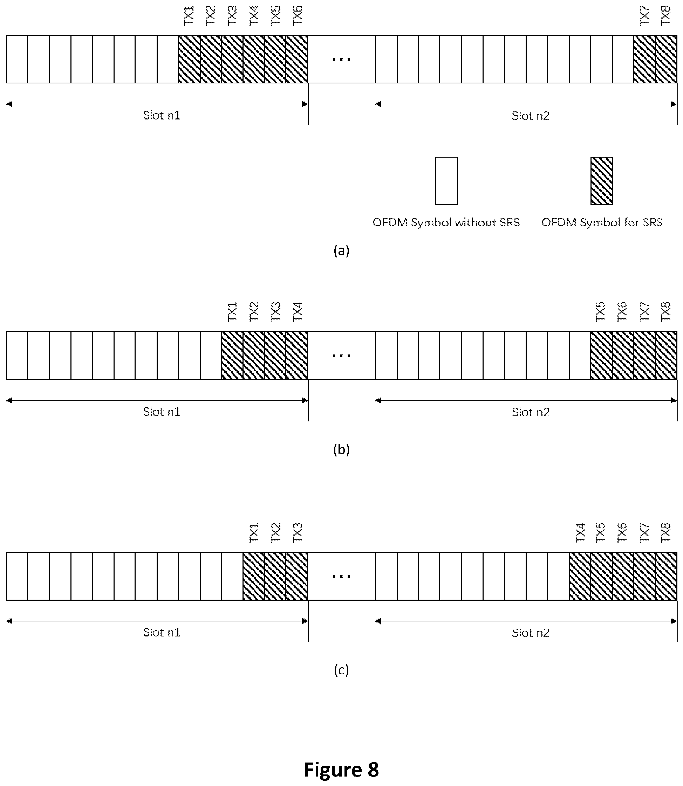

Figure 8 is a schematic illustrating aperiodic SRS transmission for antenna switching in the case of 1T8R according to an embodiment of the invention.

For UE capability 1T8R without guard period, 2 SRS resource sets each configured with *resourceType* = 'aperiodic'. A total of 8 SRS resources are transmitted in different symbols of 2 different slots. The SRS port of each SRS resource in the given 2 sets is associated with a different UE antenna port. One set is configured with 6 SRS resources and the other set is configured with 2 SRS resources, or one set is configured with 4 SRS resources and the other set is configured with 4 SRS resources, or one set is configured with 3 SRS resources and the other set is configured with 5 SRS resources.

As illustrated in Figure 8 (a), 6 SRS resources in the first SRS resource set are transmitted in the last 6 OFDM symbols in slot n1 for UE antenna ports TX1-TX6 respectively, and 2 SRS resources in the second SRS resource set are transmitted in the last 2 OFDM symbols in slot n2 for UE antenna ports TX7-TX8 respectively. As illustrated in Figure 8 (b), 4 SRS resources in the first SRS resource set in the first SRS resource set are transmitted in the last 4 OFDM symbols in slot n1 for UE antenna ports TX1-TX4 respectively, and 4 SRS resources in the second SRS resource set are transmitted in the last 4 OFDM symbols in slot n2 for UE antenna ports TX5-TX8 respectively. As illustrated in Figure 8 (c), 3 SRS resources in the first SRS resource set are transmitted in the last 3 OFDM symbols in slot n1 for UE antenna ports TX1-TX3 respectively, and 5 SRS resources in the second SRS resource set are transmitted in the last 5 OFDM symbols in slot n2 for UE antenna ports TX4-TX8 respectively. In Figure 8, the diagonal stripes shaded blocks represent symbols used to transmit SRS, and the blank blocks represent OFDM symbols without SRS.

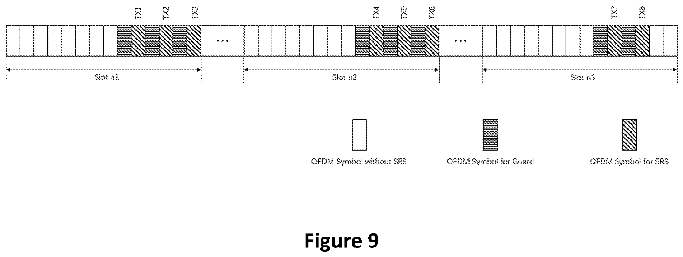

Figure 9 is a schematic illustrating aperiodic SRS transmission for antenna switching in the case of 1T8R according to another embodiment of the invention.

For UE capability 1T8R with 1 symbol guard period, 3 SRS resource sets each configured with *resourceType =* 'aperiodic'. A total of 8 SRS resources are transmitted in different symbols of 3 different slots. The SRS port of each SRS resource in the given 3 sets is associated with a different UE antenna port. Two sets are configured with 3 SRS resources and one set is configured with 2 SRS resources.

As illustrated in Figure 9, 3 SRS resources in the first SRS resource set are transmitted in the 10^{th}, 12^{th} and 14^{th} OFDM symbols in slot n1 for UE antenna ports TX1-TX3 respectively, 3 SRS resources in the second SRS resource set are transmitted in the 10^{th}, 12^{th} and 14^{th} OFDM symbols in slot n2 for UE antenna ports TX4-TX6 respectively, and 2 SRS resources in the third SRS resource set are transmitted in the 10^{th} and 12^{th} OFDM symbols in slot n3 for UE antenna ports TX7-TX8 respectively. There is one OFDM symbol for guard period between every two SRS symbols in each slot. In Figure 9, the diagonal stripes shaded blocks represent symbols used to transmit SRS, and the horizontal stripes shaded blocks represent symbols for guard period, and the blank blocks represent OFDM symbols without SRS.

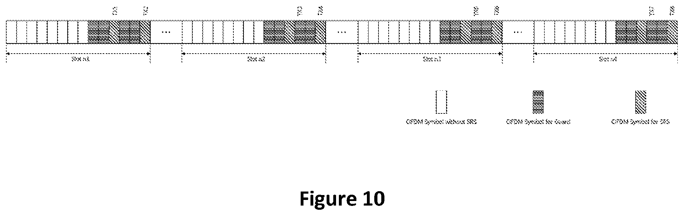

Figure 10 is a schematic illustrating aperiodic SRS transmission for antenna switching in the case of 1T8R according to another embodiment of the invention.

For UE capability 1T8R with 2 symbol guard period, 4 SRS resource sets are each configured with *resourceType* = 'aperiodic'. A total of 8 SRS resources are transmitted in different symbols of 4 different slots as illustrated in Figure 10. The SRS port of each SRS resource in the given 4 sets is associated with a different UE antenna port. The 4 sets are each configured with 2 SRS resources.

As illustrated in Figure 10, 2 SRS resources in the first SRS resource set are transmitted in the 11^{th} and 14^{th} OFDM symbols in slot n1 for UE antenna ports TX1-TX2 respectively, 2 SRS resources in the second SRS resource set are transmitted in the 11^{th} and 14^{th} OFDM symbols in slot n2 for UE antenna ports TX3-TX4 respectively, 2 SRS resources in the third SRS resource set are transmitted in the 11^{th} and 14^{th} OFDM symbols in slot n3 for UE antenna ports TX5-TX6 respectively, and 2 SRS resources in the fourth SRS resource set are transmitted in the 11^{th} and 14^{th} OFDM symbols in slot n4 for UE antenna ports TX7-TX8 respectively. There are two OFDM symbols for guard period between every two SRS symbols in each slot. In Figure 10, the diagonal stripes shaded blocks represent symbols used to transmit SRS, and the horizontal stripes shaded blocks represent symbols for guard period, and the blank blocks represent OFDM symbols without SRS.

Considering the potential PUSCH or PUCCH transmission in symbol 7 using different TX antenna port different from TX1 of SRS, and guard symbol is also required before the potential PUSCH or PUCCH transmission and the SRS transmission for antenna switching, so a first guard symbol is configured before the SRS transmission on the first TX antenna port, i.e. TX1, as shown in Figure 9 and Figure 10.

For the case more than one SRS resource sets are configured and each configured with *resourceType* = 'aperiodic', the UE shall expect that they are configured with the same values of the higher layer parameters *alpha, p0, pathlossReferenceRS,* and *srs-PowerControlAdjustmentStates* in *SRS-ResourceSet,* i.e., same power control related parameters. Since the more than one SRS resource sets should be triggered through one DCI, the UE shall expect that the value of the higher layer parameter *aperiodicSRS-ResourceTrigger* or the value of an entry in *AperiodicSRS-ResourceTriggerList* in each *SRS-ResourceSet* is the same. And the UE shall expect that the value of the higher layer parameter *slotOffset* in each *SRS-ResourceSet* is different to avoid collision between the transmission of SRS resources from different SRS resource sets.

For UE capability 2T8R, 1 SRS resource set configured with higher layer parameter *resourceType* in *SRS-ResourceSet* set to 'periodic' or 'semi-persistent'. 4 SRS resources are transmitted in different symbols. Each SRS resource in a given set consists of two SRS ports. And the SRS port pair of each resource is associated with a different UE antenna port pair.

For UE capability 2T8R, 2 SRS resource sets are each configured with higher layer parameter *resourceType* in *SRS-ResourceSet* set to 'aperiodic'. A total of 4 SRS resources are transmitted in different symbols of two different slots. The SRS port pair of each SRS resource in the given two sets is associated with a different UE antenna port pair. The two sets are each configured with two SRS resources, or one set is configured with one SRS resource and the other set is configured with three SRS resources.

The UE shall expect that the two sets are both configured with the same values of the higher layer parameters *alpha, p0, pathlossReferenceRS,* and *srs-PowerControlAdjustmentStates* in *SRS-ResourceSet,* i.e., same power control related parameters. Since the two SRS resource sets should be triggered through one DCI, the UE shall expect that the value of the higher layer parameter *aperiodicSRS-ResourceTrigger* or the value of an entry in *AperiodicSRS-ResourceTriggerList* in each *SRS-ResourceSet* is the same, and the value of the higher layer parameter *slotOffset* in each *SRS-ResourceSet* is different to avoid collision between the transmission of SRS resources from different SRS resource sets.

For UE capability 4T8R, 1 or 2 SRS resource sets may be configured for the UE with different time domain behavior. Each set is configured with 2 SRS resources transmitted in different symbols. Each SRS resource in a set consists of 4 SRS ports. And the SRS ports of the second resource in the set are associated with different UE antenna ports than the SRS ports of the first resource in the same set.

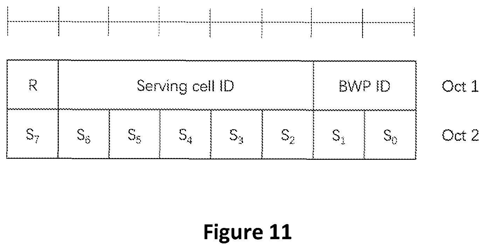

Figure 11 is a schematic illustrating an example of MAC CE format for the function of channel sounding with antenna ports subset according to an embodiment of the invention.

SRS for antenna switching with up to 8 Rx can be used for the full DL CSI acquisition for potential high rank DL transmission. For example, up to 8 layers PDSCH transmission can be achieved if the channel is good enough for the UE with 8 Rx antennas. However, higher rank transmission may not always available for a UE. For the cell-edge UE, up to rank 2 transmission may be enough and RI restriction is also supported for DL interference coordination by the gNB. In this case, partial antenna channel sounding is reasonable and also be beneficial for quick channel sounding, especially for lower rank transmission.

Generally, two types of SRS, i.e., periodic or semi-persistent and aperiodic, can be configured for one UE for antenna switching, and the gNB can obtain the full channel matrix based on the periodic or semi-persistent SRS and can pick certain antennas with strong channel vectors among all of the antennas for partial antenna sounding using aperiodic SRS. For this purpose, the gNB will assume the SRS port of the SRS resource within the SRS resource set for periodic/semi-persistent is 1-to-1 mapped to the SRS resource within the SRS resource set(s) for aperiodic according to the SRS resource ID. And the UE will transmit the aperiodic SRS resource and the associated periodic/semi-persistent SRS resource using the same antenna port(s).

Take the UE with 1T4R as an example, 1 periodic SRS resource set and two aperiodic SRS resource sets are configured as follows:

SRS resource set#1 for periodic :={SRS resource#0, SRS resource#1, SRS resource#2, SRS resource#3}

SRS resource set#2 for aperiodic :={SRS resource#5, SRS resource#6}

SRS resource set#3 for aperiodic :={SRS resource#7, SRS resource#8}.

As mentioned above, the UE will transmit the aperiodic SRS resource and the associated periodic SRS resource using the same antenna port(s). The UE will transmit SRS resource#0 and SRS resource#5 using the same antenna port, transmit SRS resource#1 and SRS resource#6 using the same antenna port, SRS resource#2 and SRS resource#7 using the same antenna port, SRS resource#3 and SRS resource#8 using the same antenna port.

For aperiodic SRS for antenna switching, since reconfiguration of SRS resource sets through RRC signaling is time-consuming, gNB may dynamically activate partial SRS resources out of all the configured SRS resources associated with the same aperiodic SRS triggering state for antenna switching. The UE may only transmit the activated SRS resources, not all the configured SRS resources, when they are triggered. The activation command may be transmitted via a MAC CE or a DCI field, e.g. along with SRS request field.

This activation signaling may be achieved by using a MAC CE as illustrated in Figure 11 for the case of 1T8R UE capability. All SRS resources associated with the same aperiodic SRS triggering state for the UE with the same UE capability are listed as a bitmap.

The Aperiodic SRS Resource set Activation/Deactivation MAC CE is identified by a MAC subheader with a dedicated LCID. It has a fixed size of 16 bits consisting of following fields:

Serving Cell ID: This field indicates the identity of the Serving Cell for which the MAC CE applies. The length of the field is 5 bits.

BWP ID: This field indicates a DL BWP for which the MAC CE applies as the codepoint of the DCI or UL bandwidth part indicator field. The length of the BWP ID field is 2 bits.

Sᵢ: This field indicates the activate status of the (i+1)^{th} SRS resources. The Sᵢ field is set to 1 to indicate that the (i+1)^{th} SRS resource shall be activated. The Sᵢ field is set to 0 to indicate that the (i+ l)^{th} SRS resource shall be deactivated. The number of Sᵢ field is dependent on the number of SRS resources configured by higher layers. And the remaining bits in this field, if any, are set as reserved bits. All SRS resources within the SRS resource sets configured with *resourceType =* 'aperiodic' for SRS switching and associated with the same aperiodic SRS triggering state are ordered according to the SRS resource ID from the lowest *SRS-ResourceId* to the highest *SRS-ResourceId.* Less than 8 Sᵢ field may be contained dependents on the number of aperiodic SRS resources configured for the UE for antenna switching.

R: Reserved bit, set to 0.

Alternatively, the SRS resource activation command may also be carried by a DCI field with an length-N bitmap, e.g. 'S₀,S₁,...,S_{N-1},S_{N}', where N is the number of configured SRS resources within the SRS resource set configured with the same *resourceType* and associated with the same aperiodic SRS triggering state for antenna switching. Each bit, i.e. Sₙ, indicates the activate status of the (n+1)^{th} SRS resources associated with the same aperiodic SRS triggering state for antenna switching with the SRS resource sets configured with the same *resourceType.*

Take the UE with 1T6R as an example, 3 SRS resource sets are configured for a UE as the following resource setting.

SRS resource set 1:={SRS resource 1, SRS resource 2};

SRS resource set 2:={SRS resource 7, SRS resource 8};

SRS resource set 3:={SRS resource 13, SRS resource 15}.

All 6 SRS resources are represented by a bitmap with 6 bits. This bitmap may be transmitted by a MAC CE with the format illustrated in Figure 11 with 6 Sᵢ fields or a DCI field along with SRS request field. If a UE receives an activation command including a bitmap with the value of "001100" and the UE also receives an SRS request that triggering those SRS resources, the UE will only transmit the SRS resources corresponding to the bit 1, i.e., SRS resource 7 and SRS resource 8, while the other SRS resources will not be transmitted.

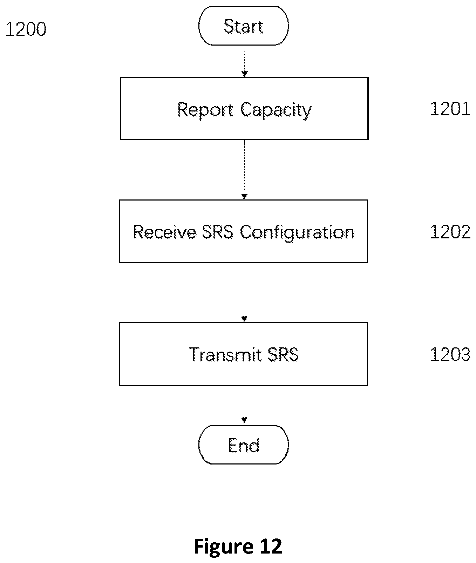

Figure 12 is a flow chart illustrating a procedure performed at a UE for SRS antenna switching according to the embodiments of the invention.

Procedure 1200 illustrates a method performed by a UE for SRS antenna switching.

At step 1201, UE reports its capability indicating the supported SRS transmission port switching. The capability includes at least 1T6R, 2T6R, 4T6R, 1T8R, 2T8R and 4T8R. In addition, the UE may also report required guard symbols for antenna switching. The required guard symbols may be 0, 1 or 2 symbols.

At step 1202, the UE receives an SRS configuration. Here, the SRS configuration is based on the UE's reporting as described above with reference to Figure 5 - Figure 11. One or more SRS resource sets are configured with each consisting of one or more SRS resources for antenna switching in the SRS configuration.

At step 1203, the UE transmits SRS resource(s) according to the received SRS configuration.

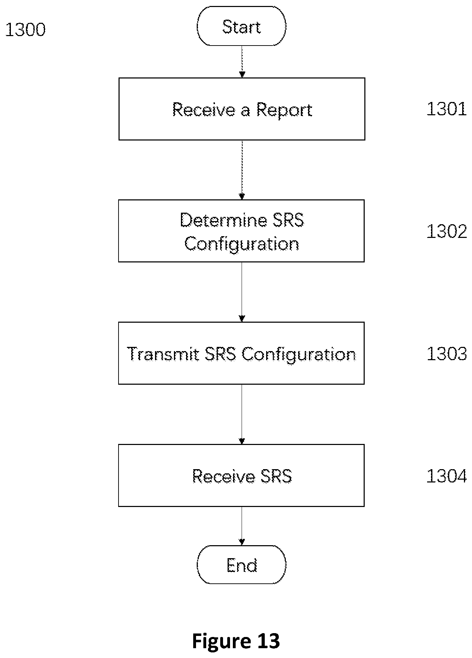

Figure 13 is a flow chart illustrating a procedure performed at a gNB for SRS antenna switching according to the embodiments of the invention.

Procedure1300 illustrates a method performed by a gNB for SRS antenna switching.

At step 1301, a gNB receives a report. The report includes capability indicating the supported SRS transmission port of a UE. The capability includes at least 1T6R, 2T6R, 4T6R, 1T8R, 2T8R and 4T8R. In addition, the report may also include required guard symbols for antenna switching. The required guard symbols may be 0, 1 or 2 symbols.

At step 1302, the gNB determines an SRS configuration for sounding. Here, the SRS configuration is based on the reporting as described above with reference to Figure 5-Figure 11. In the SRS configuration, one or more SRS resource sets are configured each consisting of one or more SRS resources for antenna switching.

At step 1303, the gNB transmits the SRS configuration.

At step 1304, the gNB receives the SRS resource(s) according to the SRS configuration.

It should be noted that the steps described above are not all necessary. It is possible to perform only some of these steps. The order of steps is also not mandatory but may be performed in other orders or in parallel. The execution of some steps requires signaling. The collective signaling described in the specification as being used for multiple steps may be replaced with separate signaling for individual steps.

In the embodiments described above, the components and the features of the embodiments are combined in a predetermined form. Each component or feature should be considered as an option unless otherwise expressly stated. Each component or feature may be implemented independently of other components or features. Further, the embodiment may be configured by associating some components and/or features. The order of the operations described in the embodiments may be changed. Some components or features of any embodiment may be included in another embodiment or replaced with the component and the feature corresponding to that of another embodiment.

In the application, the SRS configuration for antenna switching with up to 8 Rx is disclosed. UE capability of the guard period for antenna switching is introduced. The SRS configuration for different antenna configurations as well as different UE capability are described. The feature of partial antenna channel sounding is illustrated. Partial SRS resources out of the configured SRS resources can be dynamically activated via MAC CE or DCI and the UE can only transmit the activated SRS resources when they are triggered. With these solutions, features of SRS switching for up to 8 antennas, e.g. 1T6R, 2T6R, 4T6R, 1T8R, 2T8R and 4T8R can be supported efficiently.

The embodiments may be implemented by hardware, firmware, software, or combinations thereof. In the case of implementation by hardware, the exemplary embodiment described herein may be implemented by using one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and so on.

Embodiments may be practiced in other specific forms. The described embodiments are to be considered in all respects as illustrative and not restrictive. The scope of the invention is consequently defined by the appended claims rather than by the foregoing description.

## Claims

1. A method performed by a remote unit (102), the method comprising:
reporting a capability of the remote unit (102) indicating supported Sounding Reference Signals, SRS, transmission port switching, wherein the capability includes at least one or more of 1T6R and 2T6R,
receiving an SRS configuration according to the reported capability, wherein one or more SRS resource sets are configured to each comprise one or more SRS resources for antenna switching, and
transmitting one or more SRS resource(s) according to the SRS configuration,
wherein the remote unit (102) is configured with one or more guard symbols in-between the transmission of SRS resources of a set for antenna switching, wherein the remote unit (102) does not transmit any other signal during the one or more guard symbols;
wherein:
in the case that the capability is 1T6R, 1 SRS resource set is configured with resource type set as periodic or semi-persistent, the 1 SRS resource set is configured with 6 SRS resources, the 6 SRS resources are transmitted in different symbols, each SRS resource in the 1 SRS resource set consists of a single SRS port, and the SRS port of each SRS resource is associated with a different antenna port of the remote unit (102); or
in the case that the capability is 2T6R, 1 SRS resource set is configured with resource type set as periodic or semi-persistent, the 1 SRS resource set is configured with 3 SRS resources, the 3 SRS resources are transmitted in different symbols, each SRS resource in the 1 SRS resource set consists of 2 SRS ports, and the SRS port pair of each SRS resource is associated with a different antenna port pair of the remote unit (102).

2. The method of claim 1, further comprising:
reporting the one or more guard symbol(s) for antenna switching, wherein the one or more guard symbol(s) are 1 or 2 symbols.

3. The method of claim 1, further comprising:
receiving an activation command through one or more of a Media Access Control, MAC, Control Element, CE, or Downlink Control Information, DCI, wherein the activation command is configured to activate one or more SRS resources of configured SRS resources within the one or more SRS resource sets used for antenna switching with a resource type set as aperiodic.

4. The method of claim 3, wherein,
the activation command includes a bitmap in which each bit corresponds to an SRS resource, wherein a bit in the bitmap indicates an SRS resource corresponding to the bit is activated when the bit is set to 1 or an SRS resource corresponding to the bit is deactivated when the bit is set to 0.

5. The method of claim 1, further comprising:
receiving a DCI containing a non-zero SRS request field, and
transmitting activated SRS resources associated with a value of the received SRS request field.

6. The method of claim 1, wherein the guard symbol for antenna switching is 1 symbol.

7. The method of claim 1, wherein the guard symbols for antenna switching are 2 symbols.

8. A processor (202) for a remote unit (102), the processor (202) comprising at least one controller coupled with at least one memory and configured to cause the processor (202) to:
report a capability of the remote unit (102) indicating supported Sounding Reference Signals, SRS, transmission port switching, wherein the capability includes at least one or more of 1T6R and 2T6R,
receive an SRS configuration according to the reported capability, wherein one or more SRS resource sets are configured to each comprise one or more SRS resources for antenna switching, and
transmit one or more SRS resource(s) according to the SRS configuration,
wherein the processor (202) is configured with one or more guard symbols in-between the transmission of SRS resources of a set for antenna switching, wherein the processor (202) does not transmit any other signal during the one or more guard symbols;
wherein:
in the case that the capability is 1T6R, 1 SRS resource set is configured with resource type set as periodic or semi-persistent, the 1 SRS resource set is configured with 6 SRS resources, the 6 SRS resources are transmitted in different symbols, each SRS resource in the 1 SRS resource set consists of a single SRS port, and the SRS port of each SRS resource is associated with a different antenna port of the remote unit (102); or
in the case that the capability is 2T6R, 1 SRS resource set is configured with resource type set as periodic or semi-persistent, the 1 SRS resource set is configured with 3 SRS resources, the 3 SRS resources are transmitted in different symbols, each SRS resource in the 1 SRS resource set consists of 2 SRS ports, and the SRS port pair of each SRS resource is associated with a different antenna port pair of the remote unit (102).

9. The processor (202) of claim 8, wherein the guard symbol for antenna switching is 1 symbol.

10. The processor (202) of claim 8, wherein the guard symbols for antenna switching are 2 symbols.

11. The processor (202) of claim 8, wherein the processor (202) is configured to report one or more guard symbol(s) for antenna switching, wherein the one or more guard symbol(s) are 1 or 2 symbols.

## Patentansprüche

1. Verfahren, das von einer entfernten Einheit (102) durchgeführt wird, wobei das Verfahren umfasst:
Melden einer Fähigkeit der entfernten Einheit (102), die eine unterstützte Sounding Reference Signal-, SRS-, Sendeanschlussumschaltung anzeigt, wobei die Fähigkeit mindestens eines oder mehrere von 1T6R und 2T6R beinhaltet,
Empfangen einer SRS-Konfiguration gemäß der gemeldeten Fähigkeit, wobei ein oder mehrere SRS-Ressourcensätze so konfiguriert sind, dass sie jeweils eine oder mehrere SRS-Ressourcen für die Antennenumschaltung umfassen, und
Senden einer oder mehrerer SRS-Ressource(n) gemäß der SRS-Konfiguration,
wobei die entfernte Einheit (102) mit einem oder mehreren Schutzsymbolen zwischen dem Senden von SRS-Ressourcen eines Satzes zur Antennenumschaltung konfiguriert ist, wobei die entfernte Einheit (102) während des einen oder der mehreren Schutzsymbole kein anderes Signal sendet;
wobei:
in dem Fall, dass die Fähigkeit 1T6R ist, 1 SRS-Ressourcensatz mit einem Ressourcentyp konfiguriert ist, der als periodisch oder semi-persistent festgelegt ist, der 1 SRS-Ressourcensatz mit 6 SRS-Ressourcen konfiguriert ist, die 6 SRS-Ressourcen in verschiedenen Symbolen gesendet werden, jede SRS-Ressource in dem 1 SRS-Ressourcensatz aus einem einzelnen SRS-Anschluss besteht, und der SRS-Anschluss jeder SRS-Ressource einem anderen Antennenanschluss der entfernten Einheit (102) zugeordnet ist;
oder
in dem Fall, dass die Fähigkeit 2T6R ist, 1 SRS-Ressourcensatz mit einem Ressourcentyp konfiguriert ist, der als periodisch oder semi-persistent festgelegt ist, der 1 SRS-Ressourcensatz mit 3 SRS-Ressourcen konfiguriert ist, die 3 SRS-Ressourcen in unterschiedlichen Symbolen gesendet werden, jede SRS-Ressource in dem 1 SRS-Ressourcensatz aus 2 SRS-Anschlüssen besteht und das SRS-Anschlusspaar jeder SRS-Ressource einem unterschiedlichen Antennenanschlusspaar der entfernten Einheit (102) zugeordnet ist.

2. Verfahren nach Anspruch 1, ferner umfassend:
Melden des einen oder der mehreren Schutzsymbole für die Antennenumschaltung, wobei das eine oder die mehreren Schutzsymbole 1 oder 2 Symbole sind.

3. Verfahren nach Anspruch 1, ferner umfassend:
Empfangen eines Aktivierungsbefehls über ein oder mehrere Medienzugriffssteuerungs-, MAC-, Steuerelement(e), CE, oder Downlink-Steuerinformation(en), DCI, wobei der Aktivierungsbefehl dazu konfiguriert ist, eine oder mehrere SRS-Ressourcen von konfigurierten SRS-Ressourcen innerhalb des einen oder der mehreren SRS-Ressourcensätze zu aktivieren, die für die Antennenumschaltung mit einem als aperiodisch festgelegten Ressourcentyp verwendet werden.

4. Verfahren nach Anspruch 3, wobei,
der Aktivierungsbefehl eine Bitmap enthält, in der jedes Bit einer SRS-Ressource entspricht, wobei ein Bit in der Bitmap anzeigt, dass eine dem Bit entsprechende SRS-Ressource aktiviert ist, wenn das Bit auf 1 gesetzt ist, oder eine dem Bit entsprechende SRS-Ressource deaktiviert ist, wenn das Bit auf 0 gesetzt ist.

5. Verfahren nach Anspruch 1, ferner umfassend:
Empfangen einer DCI, die ein SRS-Anforderungsfeld ungleich Null enthält, und
Senden aktivierter SRS-Ressourcen, die einem Wert des empfangenen SRS-Anforderungsfeldes zugeordnet sind.

6. Verfahren nach Anspruch 1, wobei das Schutzsymbol für die Antennenumschaltung 1 Symbol ist.

7. Verfahren nach Anspruch 1, wobei die Schutzsymbole für die Antennenumschaltung 2 Symbole sind.

8. Prozessor (202) für eine entfernte Einheit (102), wobei der Prozessor (202) mindestens eine Steuereinheit umfasst, die mit mindestens einem Speicher gekoppelt und dazu konfiguriert ist, zu bewirken, dass der Prozessor (202):
eine Fähigkeit der entfernten Einheit (102) meldet, die eine unterstützte Sounding Reference Signal-, SRS-, Sendeanschlussumschaltung anzeigt, wobei die Fähigkeit mindestens eines oder mehrere von 1T6R und 2T6R beinhaltet,
eine SRS-Konfiguration gemäß der gemeldeten Fähigkeit empfängt, wobei ein oder mehrere SRS-Ressourcensätze so konfiguriert sind, dass sie jeweils eine oder mehrere SRS-Ressourcen für die Antennenumschaltung umfassen, und
eine oder mehrere SRS-Ressource(n) gemäß der SRS-Konfiguration sendet,
wobei der Prozessor (202) mit einem oder mehreren Schutzsymbolen zwischen dem Senden von SRS-Ressourcen eines Satzes zur Antennenumschaltung konfiguriert ist, wobei der Prozessor (202) während des einen oder der mehreren Schutzsymbole kein anderes Signal sendet;
wobei:
in dem Fall, dass die Fähigkeit 1T6R ist, 1 SRS-Ressourcensatz mit einem Ressourcentyp konfiguriert ist, der als periodisch oder semi-persistent festgelegt ist, der 1 SRS-Ressourcensatz mit 6 SRS-Ressourcen konfiguriert ist, die 6 SRS-Ressourcen in verschiedenen Symbolen gesendet werden, jede SRS-Ressource in dem 1 SRS-Ressourcensatz aus einem einzelnen SRS-Anschluss besteht, und der SRS-Anschluss jeder SRS-Ressource einem anderen Antennenanschluss der entfernten Einheit (102) zugeordnet ist;
oder
in dem Fall, dass die Fähigkeit 2T6R ist, 1 SRS-Ressourcensatz mit einem Ressourcentyp konfiguriert ist, der als periodisch oder semi-persistent festgelegt ist, der 1 SRS-Ressourcensatz mit 3 SRS-Ressourcen konfiguriert ist, die 3 SRS-Ressourcen in unterschiedlichen Symbolen gesendet werden, jede SRS-Ressource in dem 1 SRS-Ressourcensatz aus 2 SRS-Anschlüssen besteht und das SRS-Anschlusspaar jeder SRS-Ressource einem unterschiedlichen Antennenanschlusspaar der entfernten Einheit (102) zugeordnet ist.

9. Prozessor (202) nach Anspruch 8, wobei das Schutzsymbol für die Antennenumschaltung 1 Symbol ist.

10. Prozessor (202) nach Anspruch 8,
wobei die Schutzsymbole für die Antennenumschaltung 2 Symbole sind.

11. Prozessor (202) nach Anspruch 8,
wobei der Prozessor (202) dazu konfiguriert ist, ein oder mehrere Schutzsymbole für die Antennenumschaltung zu melden, wobei das eine oder die mehreren Schutzsymbole 1 oder 2 Symbole sind.

## Revendications

1. Procédé mis en œuvre par une unité distante (102), le procédé comprenant :
le signalement d'une capacité de l'unité distante (102) indiquant la prise en charge de la commutation de ports de transmission de signaux de référence de sondage, SRS, cette capacité incluant au moins l'une des configurations 1T6R et 2T6R,
la réception d'une configuration SRS selon la capacité signalée, un ou plusieurs ensembles de ressources SRS étant configurés pour comprendre chacun une ou plusieurs ressources SRS destinées à la commutation d'antennes, et
la transmission d'une ou plusieurs ressources SRS conformément à la configuration SRS,
l'unité distante (102) étant configurée avec un ou plusieurs symboles de garde intercalés entre les transmissions de ressources SRS d'un ensemble destiné à la commutation d'antennes, l'unité distante (102) ne transmettant aucun autre signal pendant le ou les symboles de garde ;
dans lequel :
lorsque la capacité est 1T6R, un ensemble de ressources SRS est configuré avec un type de ressource périodique ou semi-persistant, ledit ensemble de ressources SRS étant configuré avec 6 ressources SRS, les 6 ressources SRS étant transmises dans des symboles différents, chaque ressource SRS de l'ensemble de ressources SRS se composant d'un seul port SRS, et le port SRS de chaque ressource SRS étant associé à un port d'antenne différent de l'unité distante (102) ; ou
lorsque la capacité est 2T6R, un ensemble de ressources SRS est configuré avec un type de ressource périodique ou semi-persistant, ledit ensemble de ressources SRS étant configuré avec 3 ressources SRS, les 3 ressources SRS étant transmises dans des symboles différents, chaque ressource SRS de l'ensemble de ressources SRS se composant de 2 ports SRS, et la paire de ports SRS de chaque ressource SRS étant associée à une paire de ports d'antenne différente de l'unité distante (102).

2. Procédé selon la revendication 1, comprenant en outre :
le signalement du ou des symboles de garde destinés à la commutation d'antennes, le ou les symboles de garde sont au nombre de 1 ou 2.

3. Procédé selon la revendication 1, comprenant en outre :
la réception d'une commande d'activation au moyen d'un ou de plusieurs des éléments suivants : un élément de commande MAC (Media Access Control), un élément de commande CE (Control Element) ou des informations de commande descendante DCI (Downlink Control Information), la commande d'activation étant configurée pour activer une ou plusieurs ressources SRS parmi les ressources SRS configurées au sein d'un ou de plusieurs ensembles de ressources SRS utilisés pour la commutation d'antennes et ayant un type de ressource apériodique.

4. Procédé selon la revendication 3, dans lequel,
la commande d'activation comprend un masque binaire, chaque bit du masque binaire correspondant à une ressource SRS, un bit du masque binaire indiquant que la ressource SRS correspondant au bit est activée lorsque le bit est fixé à 1 ou que la ressource SRS correspondant au bit est désactivée lorsque le bit est fixé à 0.

5. Procédé selon la revendication 1, comprenant en outre :
la réception de DCI comprenant un champ de requête SRS non nul, et
la transmission de ressources SRS activées associées à une valeur du champ de requête SRS reçu.

6. Procédé selon la revendication 1, dans lequel le symbole de garde destiné à la commutation d'antennes est au nombre de 1.

7. Procédé selon la revendication 1, dans lequel les symboles de garde destinés à la commutation d'antennes sont au nombre de 2.

8. Processeur (202) destiné à une unité distante (102), le processeur (202) comprenant au moins un contrôleur couplé à au moins une mémoire et configuré pour amener le processeur (202) à :
signaler une capacité de l'unité distante (102) indiquant la prise en charge de la commutation de ports de transmission de signaux de référence de sondage, SRS, la capacité comprenant au moins l'une des configurations 1T6R et 2T6R,
recevoir une configuration SRS selon la capacité signalée, un ou plusieurs ensembles de ressources SRS étant configurés pour comprendre chacun une ou plusieurs ressources SRS destinées à la commutation d'antennes, et
transmettre une ou plusieurs ressources SRS conformément à la configuration SRS, le processeur (202) étant configuré avec un ou plusieurs symboles de garde intercalés entre les transmissions de ressources SRS d'un ensemble destiné à la commutation d'antennes, le processeur (202) ne transmettant aucun autre signal pendant le ou les symboles de garde ;
dans lequel :
lorsque la capacité est 1T6R, un ensemble de ressources SRS est configuré avec un type de ressource périodique ou semi-persistant, ledit ensemble de ressources SRS étant configuré avec 6 ressources SRS, les 6 ressources SRS étant transmises dans des symboles différents, chaque ressource SRS de l'ensemble de ressources SRS se composant d'un seul port SRS, et le port SRS de chaque ressource SRS étant associé à un port d'antenne différent de l'unité distante (102) ; ou
lorsque la capacité est 2T6R, un ensemble de ressources SRS est configuré avec un type de ressource périodique ou semi-persistant, ledit ensemble de ressources SRS étant configuré avec 3 ressources SRS, les 3 ressources SRS étant transmises dans des symboles différents, chaque ressource SRS de l'ensemble de ressources SRS se composant de 2 ports SRS, et la paire de ports SRS de chaque ressource SRS étant associée à une paire de ports d'antenne différente de l'unité distante (102).

9. Processeur (202) selon la revendication 8, dans lequel le symbole de garde destiné à la commutation d'antennes est au nombre de 1.

10. Processeur (202) selon la revendication 8, dans lequel les symboles de garde destinés à la commutation d'antennes sont au nombre de 2.

11. Processeur (202) selon la revendication 8, dans lequel le processeur (202) est configuré pour signaler un ou plusieurs symboles de garde destinés à la commutation d'antennes, le ou les symboles de garde étant au nombre de 1 ou 2.
